# EUROPÄISCHE PATENTSCHRIFT

(11) **EP 0 385 085 B1**
(45) Veröffentlichungstag und Bekanntmachung des Hinweises auf die Patenterteilung: **30.06.1993**
(21) Anmeldenummer: 90101158.5
(22) Anmeldetag: 20.01.1990
(51) Int. Cl.: B09B 1/00

(54) **Verfahren zur schadlosen Entgasung und Deponierung von Feststoffen in untertägigen Kavernen**
Method for the non-pollutant degassing and disposing of solids in underground cavities
Méthode pour le dégazage non polluant et la mise en dépôt de solides dans des cavernes souterraines

(30) Priorität: 27.02.1989 DE 3906037
(43) Veröffentlichungstag der Anmeldung: 05.09.1990
(73) Patentinhaber: KALI UND SALZ AKTIENGESELLSCHAFT, D-34111 Kassel (DE)
(72) Erfinder: Lehmann, Gerhard, Dr., D-3501 Fuldabrück-Simmershs. (DE); Neitzel, Ulrich, Dr., D-3500 Kassel (DE); Stahl, Ingo, Dr., D-6433 Philippsthal (DE)

(56) Entgegenhaltungen:
- DE-A- 3 137 950
- DE-A- 3 200 347
- DE-A- 3 601 428
- FR-A- 2 562 044

## Beschreibung

Die Erfindung betrifft ein Verfahren zur schadlosen Deponierung von Salzschlacken aus der Aluminiumherstellung.

In allen Industrieländern fallen sowohl in der Grundstoffindustrie, wie vor allem auch in der chemischen Industrie, Abfallstoffe an. Trotz aller Bemühungen, diese als Sekundärrohstoffe zu nutzen bzw. deren Abfall durch entsprechende Produktions technologien geringzuhalten oder ganz zu vermeiden, wird es auch weiterhin gewisse Mengen geben, die schadlos beseitigt werden müssen, um eine unzumutbare Belastung für die Umwelt zu vermeiden.

Als besonders sicher werden in dieser Hinsicht untertägige Deponien angesehen und entsprechend genutzt (Überblick in der "Zeitschrift für angewandte Geologie", Bd. 27, (1981) Heft 1, Seite 17-25.)

Ein Verfahren zur Vorbehandlung von festen Abfallstoffen zur Einführung in untertägige Salzkavernen wird in der DE-OS 36 01 428 beschrieben.

Hierbei geht es darum, das gegebenenfalls stükkige bzw. klebrige Material durch Mahlung bzw. Pelletisierung so aufzubereiten, daß es störungsfrei in die Salzkaverne eingerieselt werden kann.

Unter den Abfallstoffen, die in der Industrie anfallen und entsorgt werden müssen, gibt es solche, die bei der Lagerung durch Reaktion mit der umgebenden Luft und des darin enthaltenden Wassers Gase entwickeln. Hierzu gehören Salzschlacken aus der Aluminiumherstellung.

Die DE-PS 32 00 347 gibt Maßnahmen an, mit denen die in Gegenwart von Feuchtigkeit Gase entwickelnde Salzschlacke, die zur Abdeckung von schmelzflüssigem Aluminium gedient hat und von diesem getrennt ist, in ein deponierbares oder aufarbeitbares Produkt verarbeitet werden kann. Hierzu wird die in feinteilige Form überführte Salzschlacke mit heißem Wasser behandelt, anschließend einer Wärmebehandlung unterworfen, getrocknet und gekühlt.

Nachteilig an diesem Verfahren ist, daß die in dem getrockneten Gut verbleibenden Aluminiumreste bei Anwesenheit von Feuchtigkeit zumindest unter Freisetzung von Wasserstoff weiterreagieren, so daß ein Deponieraum also praktisch feuchtigkeitsfrei sein muß, wenn eine Reaktion völlig verhindert werden soll. Eine Kaverne ist aber nicht frei von Feuchtigkeit, so daß sich deren Verwendung als Deponieraum für Salzschlacke nach dem Stand der Technik verbietet.

Der Erfindung liegt die Aufgabe zugrunde, Salzschlacken aus der Aluminiumherstellung in Salzkavernen ohne Gefährdung der Umwelt zur Endlagerung zu bringen.

Zur Lösung der Aufgabe werden folgende Verfahrensschritte vorgeschlagen:
a) Anmaischen der Salzschlacke mit einer gesättigten Salzlösung in einem Anmaischbehälter unter Luftabschluß,
b) Pumpen der Trübe in eine Salzkaverne und Rückführen der überstehenden Lösung in den Anmaisch behälter,
c) Verbrennung der im Anmaischbehälter und in der Salzkaverne entstehenden Gase durch einen Brenner,
d) Herauswaschen der durch die Verbrennung oxidierten Gase mit einer wäßrigen Lösung,
e) Deponieren der wäßrigen Waschlösung in der Salzkaverne.

Neben den in der als Reaktionsraum dienenden Salzkaverne und dem Anmaischbehälter durch Reaktion des Restaluminiums mit Wasser entstehenden Schadgasen, wie Schwefelwasserstoff, Phosphorwasserstoff und Ammoniak, werden auch Wasserstoff und weitere niedere Kohlenwasserstoffe, wie Methan oder Acetylen, gebildet, die in Verbindung mit Sauerstoff ein explosives Gemisch entstehen lassen. Durch das erfindungsgemäße Verfahren werden die Schadgase umweltfreundlich entsorgt, und es wird die Entstehung eines explosiven Gemisches durch die Vermeidung von Sauerstoffzufuhr (Verfahrensschritt a), insbesondere auch durch den Einsatz einer Zellenradschleuse, verhindert.

Nach einem vorteilhaften Merkmal des Verfahrens wird vor dem Anmaischen der Salzschlacke in dem Anmaischbehälter gemäß Verfahrensschritt a) die Hauptmenge des metallischen Aluminiums durch selektive Mahlung entfernt. Hierdurch wird der der Deponierung zugeführte Aluminiumgehalt in der Salzschlacke auf ein Minimum reduziert.

Im einzelnen ist das Verfahren durch weitere vorteilhafte Maßnahmen gekennzeichnet. So wird die gesättigte Salzlösung gemäß Verfahrensschritt a) unmittelbar aus der Salzkaverne zurückgeführt.

Die Gase aus dem Anmaischbehälter und der Salzkaverne werden vor deren Verbrennung in einem Speicherbehälter gesammelt, um dann bei Erreichen eines bestimmten Druckes das Gas im Brenner unter Luft- und Brennstoffzufuhr zu verbrennen. Um in jedem Fall sicherzustellen, daß keine Restmengen an schädlichen Gasen nach der Verbrennung in die Umwelt gelangen, werden die Gase nach Durchlaufen des Wäschers gemäß Verfahrensschritt d) aus Anspruch 1 durch Adsorption an Aktivkohle gereinigt.

Nach einem weiteren wesentlichen Merkmal der Erfindung wird der Salzschlacke vor deren Einführung in den Anmaischbehälter ein Inertgas zugesetzt, z.B. Stickstoff oder Kohlendioxid, dies deshalb, um auch das Restrisiko der Entstehung eines explosiven Gemisches von Sauerstoff mit Wasserstoff und Sauerstoff mit Methan oder Acetylen zu minimieren.

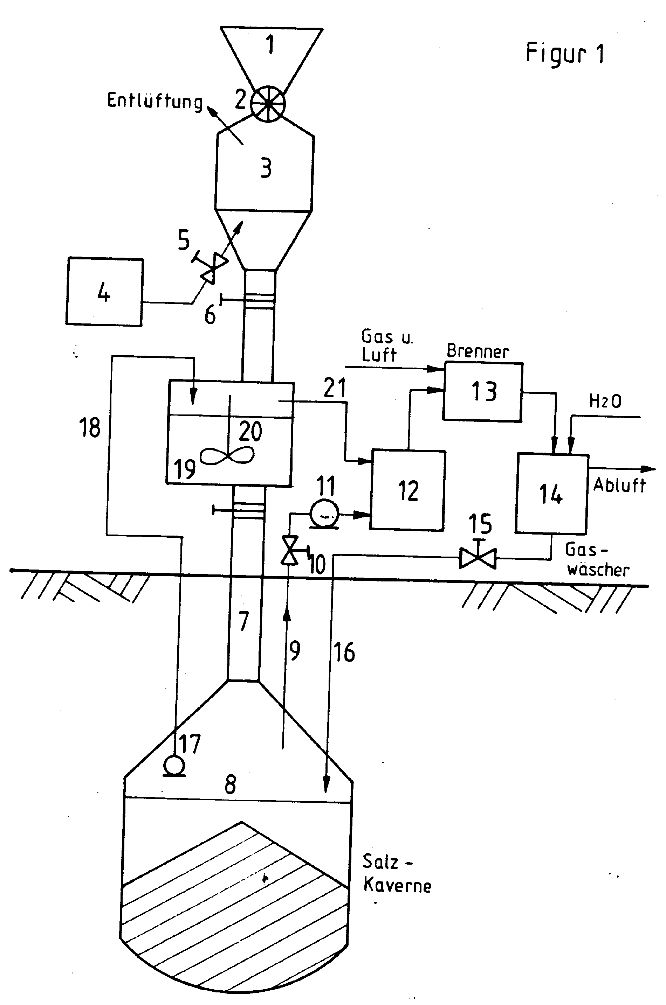

Im Detail wird das erfindungsgemäße Verfahren anhand der Figur 1 näher erläutert:

Die Salzschlacke wird zunächst selektiv gemahlen, wobei die Hauptmenge des metallischen Aluminiums abgetrennt wird, und absatzweise über den Trichter 1 und die Zellenradschleuse 2 in den Bunker 3 gegeben, der unter Luftabschluß steht, um zündfähige Gemische zu vermeiden. Darüber hinaus wird aus dem Behälter 4 über das Ventil 5 ein Inertgas (Stickstoff bzw. CO₂) hinzugegeben, die Salzschlacke damit fluidisiert und durch Öffnung des Ventils 6 in den Anmaischbehälter 19 gegeben, der mit einem Rührer 20 versehen ist. Hier wird das Salz mit Flüssigkeit, die über Leitung 18 aus der Kaverne mit Pumpe 17 herangeschafft wird, aufgeschlämmt. Nach etwa halbstündigem Rühren, wobei bereits eine chemische Reaktion in Gang kommt, wird das Gemisch über das Fallrohr 7 in die Salzkaverne 8 abgelassen.

Durch die in der Kaverne vorhandene Feuchtigkeit kommt es zu einer weiteren chemischen Reaktion mit den verschiedenen Bestandteilen der Salzschlacke und zur Entwicklung von (gasförmigen) Bestandteilen, wie Wasserstoff (H₂), Methan (CH₄), Schwefelwasserstoff (H₂S), Phosphorwasserstoffe, wie Phosphin (PH₃) oder Diphosphan (P₂H₄) und Ammoniak (NH₃).

Diese Gase werden mit Hilfe der Vakuumpumpe 11 (nach Öffnung des Ventils 10) über die Rohrleitung 9 in den Speicherbehälter 12 gedrückt. Auch die Gase, die im Anmaischbehälter 19 entstehen, werden dem Speicherbehälter 12 zugeführt. Bei Erreichen eines vorgegebenen Überdrucks wird das Schadgas durch den Brenner 13 unter Luft- und Brennstoffzufuhr verbrannt.

Die oxidierten Schadgase (in Form von Schwefeldioxid, P₂O₅ und nitrosen Gasen) werden im Wäscher 14 mit Wasser niedergeschlagen und die Waschlösung nach Erreichen einer vorgegebenen Konzentration über Fallrohr 16 in die Kaverne abgelassen. Die damit in die Kaverne gelangte Feuchtigkeit dient gleichzeitig als Reaktionswasser für die Umsetzung der Schadstoffe.

Die nicht ausgewaschenen Schadgasreste werden an Aktivkohle adsorptiv gebunden.

## Patentansprüche

1. Verfahren zur schadlosen Deponierung von Salzschlacken aus der Aluminiumherstellung, gekennzeichnet durch folgende Merkmale:
a) Anmaischen der Salzschlacke mit einer gesättigten Salzlösung in einem Anmaischbehälter (19) unter Luftabschluß,
b) Pumpen der Trübe in eine Salzkaverne (8) und Rückführen der überstehenden Lösung in den Anmaischbehälter (19),
c) Verbrennung der im Anmaischbehälter (19) und in der Salzkaverne (8) entstehenden Gase durch einen Brenner (13),
d) Herauswaschen der durch die Verbrennung oxidierten Gase mit einer wäßrigen Lösung,
e) Deponierung der wäßrigen Waschlösung in der Salzkaverne (8).

2. Verfahren nach Anspruch 1, dadurch gekennzeichnet, daß vor dem Anmaischen der Salzschlacke gemäß Verfahrensschritt a) die Hauptmenge des metallischen Aluminiums durch selektive Mahlung entfernt wird.

3. Verfahren nach Anspruch 1, dadurch gekennzeichnet, daß die gesättigte Salzlösung gemäß Verfahrensschritt a) aus der Salzkaverne zurückgeführt wird.

4. Verfahren nach Anspruch 1, dadurch gekennzeichnet, daß die Gase aus dem Anmaischbehälter (19) und der Salzkaverne (8) vor deren Verbrennung in einem Speicherbehälter (12) gesammelt werden.

5. Verfahren nach Anspruch 1, dadurch gekennzeichnet, daß die Gase nach Durchlaufen des Wäschers gemäß Verfahrensschritt d) durch Adsorption an Aktivkohle gereinigt werden, bevor diese in die Umgebung abgegeben werden.

6. Verfahren nach Anspruch 1, dadurch gekennzeichnet, daß der Salzschlacke ein Inertgas zugesetzt wird.

7. Verfahren nach Ansprüchen 1 und 6, dadurch gekennzeichnet, daß das Inertgas der Salzschlacke vor dessen Einführung in den Anmaischbehälter (19) zugesetzt wird.

8. Verfahren nach Anspruch 1, dadurch gekennzeichnet, daß die Salzschlacke dem Anmaischbehälter (19) durch eine Zellenradschleuse (2) zugeführt wird.

## Claims

1. A method of harmlessly disposing of salt slags from the production of aluminium, characterized by the following features:
a) mashing the salt slag with a saturated salt solution in a mashing container (19) with the exclusion of air,
b) pumping the slurry into a salt cavern (8) and returning the supernatant solution into the mashing container (19),
c) burning by means of a burner (13) the gases produced in the mashing container (19) and in the salt cavern (8),
d) washing out with an aqueous solution the gases which are oxidised by the burning operation, and
e) disposing of the aqueous washing solution in the salt cavern (8).

2. A method according to claim 1 characterised in that prior to mashing of the salt slag in accordance with method step a), the main amount of the metal aluminium is removed by selective crushing.

3. A method according to claim 1 characterised in that the saturated salt solution in accordance with method step a) is returned from the salt cavern.

4. A method according to claim 1 characterised in that the gases from the mashing container (19) and the salt cavern (18) are collected in a storage container (12) before they are burnt.

5. A method according to claim 1 characterised in that after passing through the washer in accordance with method step d) the gases are cleaned by adsorption on activated carbon before they are discharged into the environment.

6. A method according to claim 1 characterised in that an inert gas is added to the salt slag.

7. A method according to claims 1 and 6 characterised in that the inert gas is added to the salt slag before it is introduced into the mashing container (19).

8. A method according to claim 1 characterised in that the salt slag is fed to the mashing container (19) by means of a cell wheel lock device (2).

## Revendications

1. Procédé de mise à la décharge sans dommages de scories sous forme de sel provenant de la fabrication de l'aluminium,
remarquable par les caractéristiques suivantes :
a) mouillage de la scorie sous forme de sel par une solution de sel saturée dans une cuve de mouillage (19 ) à l'abri de l'air,
b) pompage de la suspension dans une caverne de sel (8) et recyclage de la solution surnageante dans la cuve de trempage (19),
c) combustion des gaz formés dans la cuve de trempage (19) et dans la caverne de sel (8) par un brûleur (13),
d) enlèvement par lavage, à l'aide d'une solution aqueuse, des gaz oxydés par la combustion,
e) mise à la décharge de la solution aqueuse de lavage dans la caverne de sel (8).

2. Procédé suivant la revendication 1, caractérisé en ce qu'il consiste à éliminer avant le mouillage de la scorie sous forme de sel, suivant le stade a) du procédé, la plus grande partie de l'aluminium métallique par broyage sélectif.

3. Procédé suivant la revendication 1, caractérisé en ce qu'il consiste à recycler la solution de sel saturée, suivant le stade a) du procédé, de la caverne de sel.

4. Procédé suivant la revendication 1, caractérisé en ce qu'il consiste à rassembler les gaz provenant de la cuve de mouillage (19) et de la caverne de sel (8) avant leur combustion dans un réservoir de stockage (12).

5. Procédé suivant la revendication 1, caractérisé en ce qu'il consiste à épurer les gaz, après traversée du laveur suivant le stade d) du procédé, par adsorption sur du charbon actif, avant de les envoyer à l'atmosphère.

6. Procédé suivant la revendication 1, caractérisé en ce qu'il consiste à ajouter un gaz inerte à la scorie sous forme de sel.

7. Procédé suivant les revendications 1 et 6, caractérisé en ce qu'il consiste à ajouter le gaz inerte à la scorie de sel avant son introduction dans la cuve de mouillage (19).

8. Procédé suivant la revendication 1, caractérisé en ce qu'il consiste à envoyer la scorie sous forme de sel à la cuve de mouillage (19) par un sas à roue cellulaire (2).
